# EUROPÄISCHE PATENTSCHRIFT

(11) **EP 0 692 396 B1**
(45) Veröffentlichungstag und Bekanntmachung des Hinweises auf die Patenterteilung: **24.09.1997**
(21) Anmeldenummer: 95108207.2
(22) Anmeldetag: 30.05.1995
(51) Int. Cl.: B60D 1/62, B60Q 1/30, B60R 16/02

(54) **Elektrisches Anhängeranschlussgerät für ein Zugfahrzeug**
Trailer electrical connecting device for a towing vehicle
Boîte de raccordement électrique de remorque pour un véhicule tracteur

(30) Priorität: 12.07.1994 DE 4424471
(43) Veröffentlichungstag der Anmeldung: 17.01.1996
(73) Patentinhaber: DAIMLER-BENZ AKTIENGESELLSCHAFT, 70567 Stuttgart (DE)
(72) Erfinder: Pelz, Markus, Dipl.-Ing., D-71549 Auenwald (DE); Beranek, Werner, Dipl.-Ing., D-71101 Schönaich (DE)

(56) Entgegenhaltungen:
- EP-A- 0 430 792
- EP-A- 0 546 370
- DE-A- 4 111 223
- GB-A- 2 054 290
- US-A- 5 241 241

## Beschreibung

Die Erfindung bezieht sich auf ein elektrisches Anhängeranschlußgerät nach dem Oberbegriff des Patentanspruchs 1, das in Zugfahrzeuge einbaubar ist, die über ein steuergerateverbindendes Datennetz verfügen. Derartige Steuergerätevernetzungen zur Verbindung aller wichtigen Steuergeräte und Bedienelemente sind bekannt, z.B. in Form eines sog. CAN-Busses.

Ein solches CAN-Bussystem für ein Automobil wird von H.-W. Wolff in der Zeitschrift Radio Fernsehen Elektronik (RFE), 1992, Heft 12, unter dem Titel "Halbleiterkonzepte für die Automobilelektronik" auf Seiten 838 bis 841 beschrieben. Bei dem dortigen System ist eine jeweilige Sensor-/Aktuator-Baugruppe über ein eigenes Steuergerät mit dem CAN-Bus verknüpft. Dabei kann vorgesehen sein, den jeweiligen Aktuator, z.B. eine Lampe, über einen Leistungshalbleiterschalter zu betätigen, der vom zugehörigen Steuergerät angesteuert wird.

Ein in der Offenlegungsschrift DE 41 34 981 A1 offenbartes elektrisches Anhängeranschlußgerät besitzt eine Anschlußkontakteinheit zum Anschließen verschiedener Lampen der Beleuchtungs- und Signalanlage eines Anhängerfahrzeuges sowie eine der Anschlußkontakteinheit vorgeschaltete Leistungshalbleiterschaltergruppe, wobei jeweils ein Halbleiterschalter mit seiner Schaltstrecke zwischen einen Stromversorgungsanschluß und einen zugeordneten Anschlußkontakt eingeschleift ist. Die Ansteuerung des jeweiligen Halbleiterschalters erfolgt durch die Spannung, mit der eine jeweils zugeordnete Lampe des Zugfahrzeuges beaufschlagt wird. Demzufolge besitzt dieses Anhängeranschlußgerät eine der Anzahl anzusteuernder Lampen entsprechende Anzahl von Steuerungseingängen, was entsprechenden Verkabelungs- und Montageaufwand beim Anschließen des Anhängeranschglußgerätes an die Fahrzeugelektrik des Zugfahrzeuges erfordert. Zu Diagnosezwecken besitzt das Anhängeranschlußgerät eine zwischen der Halbleiterschaltergruppe und der Anschlußkontakteinheit befindliche Überwachungsschaltung, welche die Ausgangssignale der Halbleiterschalter in ganz spezieller Weise über UND- sowie ODER-Gatter so verknüpft, daß über eine Diagnoseausgangsleitung eine Kontrollleuchte im Zugfahrzeug auf unterschiedliche Arten betreibbar ist, von denen jede einen bestimmten Zustand der Lampen des Anhängerfahrzeuges kennzeichnen soll.

In der Offenlegungsschrift EP 0 430 792 A1 ist eine Fahrzeuglichtanlage beschrieben, bei der den Lampen ansteuerbare Leistungsschalter in direkter Nachbarschaft vorgeschaltet sind und mit diesen einen optischen Block bilden. Die Leistungsschalter werden über einen von diesem Block separierten Dekodierer angesteuert, der entsprechende Steuersignale über einen Datenbus empfängt. Die Signale werden von einer Steuereinheit erzeugt und über einen anschließenden Kodierer bzw. Multiplexer auf den Datenbus gegeben.

In der Offenlegungsschrift DE 41 11 223 A1 wird eine Anordnung vorgeschlagen, mit der ein Informationsaustausch zwischen einer Zugmaschine und angehängten Fahrzeugen über eine vorhandene, genormte Anhängersteckdose bewirkt werden kann. Dieser Informationsaustausch erfolgt mittels eines Signals, das in der Zugmaschine und den angehängten Fahrzeugen durch geeignete Steuergeräte erzeugt und gelesen werden kann, wobei es zwischen der Zugmaschine und den angehängten Fahrzeugen als auf die vorhandene Anhängersteckdosenverbindung aufmoduliertes und kodiertes Signal übertragen wird.

Der Erfindung liegt als technisches Problem die Bereitstellung eines elektrischen Anhängeranschlußgerätes der eingangs genannten Art zugrunde, welches eine zuverlässige Ansteuerung elektrischer Komponenten des Anhängerfahrzeuges mit geringem Verkabelungs- und Montageaufwand ermöglicht.

Dieses Problem wird durch ein elektrisches Anhängeranschlußgerät mit den Merkmalen des Patentanspruches 1 gelöst. Der Anschluß des Anhängeranschlußgerätes an die Fahrzeugelektrik des Zugfahrzeuges benötigt unabhängig von der Anzahl anzusteuernder Komponenten im Anhängerfahrzeug lediglich mindestens drei einzelne Anschlüsse, nämlich die beiden Stromversorgungsanschlüsse sowie einen Datennetzanschluß. Selbst wenn für die Datennetzverbindung zwei Einzelanschlüsse vorgesehen sind, z.B. als Anschlüsse an einen CAN-Bus, ist die Anzahl der Verbindungen des Anhängeranschlußgerätes zur Zugfahrzeugelektrik meist noch immer deutlich geringer als die Anzahl anzusteuernder elektrischer Komponenten des Anhängerfahrzeuges. Außerdem ist eine einfache Nachrüstbarkeit von Zugfahrzeugen, die bereits über ein steuergeräteverbindendes Datennetz verfügen, mit einem solchen Anhängeranschlußgerät gegeben.

Mit einer Weiterbildung der Erfindung nach Anspruch 2 läßt sich die Funktion der anzusteuernden elektrischen Komponente des Anhängerfahrzeuges durch das Anhängeranschlußgerät überwachen und als entsprechende Diagnoseinformation in das zugfahrzeugseitige Datennetzwerk zur Weiterverwendung einspeisen.

Durch eine Weiterbildung der Erfindung nach Anspruch 3 läßt sich selbsttätig gesteuert Strom sparen, solange nicht tatsächlich eine elektrische Komponente des Anhängerfahrzeuges angesteuert wird.

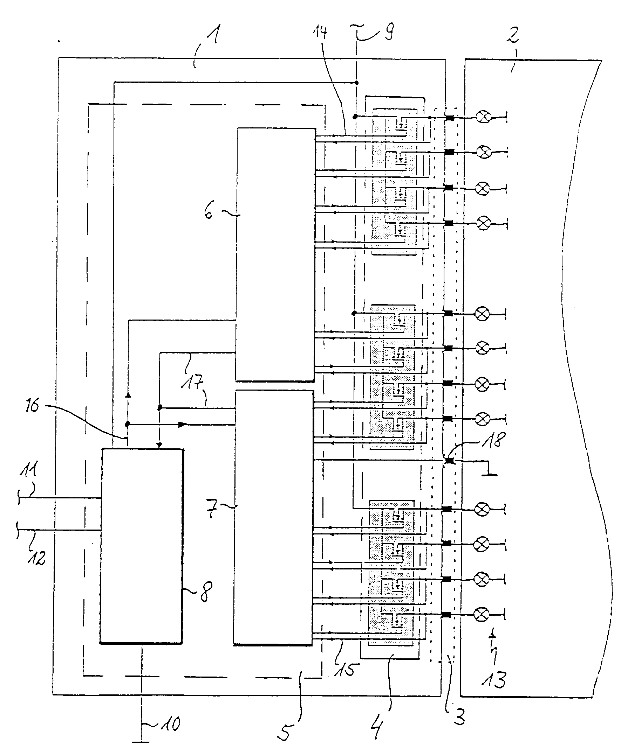

Eine bevorzugte Ausführungsform der Erfindung ist in der Zeichnung dargestellt und wird nachfolgend beschrieben.

Die einzige Figur zeigt ein Blockschaltbild eines elektrischen Anhängeranschlußgerätes für ein Zugfahrzeug mit einem CAN-Bus.

Das elektrische Anhängeranschlußgerät (1) dient dazu, die Beleuchtungs-und Signalanlageelektrlk (2) eines Anhängerfahrzeuges an die im jeweiligen Zugfahrzeug vorgesehenen Bedienelemente anzukoppeln. Zum Anschluß der Fahrzeugelektrik (2) des Anhängerfahrzeuges an das im Zugfahrzeug zu montierende Anhängeranschlußgerät (1) besitzt letztere ausgangsseitig eine Anschlußkontakteinheit (3) mit einer der Anzahl der einzeln anzusteuernden Lampen (13) der Beleuchtungs- und Signalanlage (2) des Anhängerfahrzeuges entsprechenden Anzahl von Anschlußkontakten. Im gezeigten Beispiel umfaßt die anhängerseitige Lampengruppe (13) ein Nebelschlußlicht, eine Kennzeichenleuchte, eine Reservelampe, jeweils ein Schlußlicht, ein Blinklicht, ein Bremslicht und einen Rückfahrscheinwerfer links und rechts sowie ein drittes Bremslicht. Eine Anschlußklemme (18) der Anschlußkontakteinheit (3) dient der Erkennung, ob ein Anhängerfahrzeug angeschlossen ist.

Das Anhängeranschlußgerät (1) beinhaltet des weiteren eine der Anschlußkontakteinheit (3) vorgeschaltete Leistungshalbleiterschaltergruppe (4) sowie ein dieser Gruppe (4) vorgeschaltetes Steuergerät (5). Die Leistungshalbleiterschaltergruppe (4) besteht aus kurzschlußfesten MOSFETs, wobei jeweils ein MOSFET mit seiner Schaltstrecke zwischen einen gemeinsamen, von der Zugfahrzeugelektrik gespeisten Spannungsversorgungsanschluß (9) und einen zugehörigen Anschlußkontakt der Anschlußkontakteinheit (3) eingeschleift ist. Das Steuergerät (5) beinhaltet zwei anwendungsspezifische integrierte Schaltkreisbausteine (6, 7) und einen Microcontroler (8). Über den Microcontroler (8) ist das Anhängeranschlußgerät (1) an einen Masseanschluß (10) des Zugfahrzeuges sowie über zwei Datenleitungen (11, 12) an den im Zugfahrzeug vorgesehenen CAN-Bus anschließbar, über den unter anderem eine dezentrale elektronische Lichtschaltung realisiert wird, indem die Steuerungsinformationen von den verschiedenen Bedienelementen über den CAN-Bus zu den jeweiligen lampenansteuernden Einheiten geführt werden.

Die anwendungsspezifischen integrierten Schaltkreisbausteine (6, 7) bilden Ansteuerungs- und Überwachungseinheiten für die Halbleiterschaltergruppe (4). Zu diesem Zweck sind die Gate-Elektroden der MOSFETs jeweils über eine Ansteuerleitung mit einem zugehörigen Steuerausgang dieser Einheiten (6, 7) verbunden, und von jedem Leitungsabschnitt zwischen einem MOSFET und dem zugehörigen Anschlußkontakt zweigt eine Diagnoseleitung (15) ab, die diesen Einheiten (6, 7) zugeführt ist. Die Ansteuerungs- und Überwachungseinheiten (6, 7) werden ihrerseits von dem Microcontroler (8) gesteuert, wozu eine sich zu diesen Einheiten (6, 7) verzweigende Steuerleitung (16) vom Controler (8) abführt. Umgekehrt leiten die Ansteuerungs- und Überwachungseinheiten (6, 7) über je eine Diagnoseleitung (17), die an einen gemeinsamen Diagnoseeingang des Controlers (8) geführt sind, die Diagnoseinformationen an letzteren weiter. Der Controler (8) erhält die erforderlichen Informationen über den Betrieb der Lampen (13) im Anhängerfahrzeug zur entsprechenden Steuerung der Halbleiterschalteransteuerungseinheiten (6, 7) über die Datenleitungen (11, 12) vom CAN-Bus, wobei eine Datenleitung den hohen CAN-Pegel und die andere Datenleitung den niedrigen CAN-Pegel führt. Umgekehrt gibt der Controler (8) die über den Diagnoseeingang eingehenden Diagnoseinformationen über diese Datenleitungen (11, 12) auf den CAN-Bus, wo sie im Zugfahrzeug ausgewertet werden können, z.B. zum Betrieb zugehöriger Warn- oder Kontrolleuchten am Armaturenbrett.

Bei am Zugfahrzeug montiertem Anhängeranschlußgerät (1) läßt sich folglich die komplette Schaltung der Beleuchtungs- und Signalanlage des Anhängerfahrzeuges gemäß zugfahrzeugseitig auf den CAN-Bus gegebenen Bedieninformationen über eine einfache Steckverbindung zwischen Anhänger- und Zugfahrzeug realisieren, wobei der Betrieb der Anhängerbeleuchtung von derjenigen des Zugfahrzeuges entkoppelt ist. Zur Montage des Anhängeranschlußgerätes (1) im Zugfahrzeug brauchen lediglich vier Leitungen angeschlossen zu werden, nämlich die beiden Datenleitungen (11, 12) sowie der Masseanschluß (10) und der Spannungsversorgungsanschluß (9). Daraus resultiert ein geringer Verkabelungsaufwand und eine einfache Nachrüstbarkeit von bereits CAN-vernetzten Zugfahrzeugen. Da das Anhängeranschlußgerät (1) über den eigenen Stromversorgungsanschluß (9) und die Leistungshalbleiterschaltergruppe (4) verfügt, brauchen Endstufen einer Beleuchtungs- und Signalanlagenansteuerung im Zugfahrzeug, z.B. eine Heckknotenendstufe, nicht für zusätzliche Lampenlasten des Anhängerfahrzeuges ausgelegt sein, so daß keine diesbezügliche Vorrüstung erforderlich ist. Des weiteren erlaubt das Anhängeranschlußgerät (1) eine komplette Anhängerbeleuchtungsdiagnose einschließlich Weitermeldung an andere, an den CAN-Bus angeschlossene Einheiten, wie Fahreranzeige oder Kombiinstrumente mit Betriebsanzeige.

Über die Anschlußklemme (18) vermag das Anhängeranschlußgerät (1) überdies zu erkennen, ob überhaupt ein Anhängerfahrzeug elektrisch an das Zugfahrzeug angeschlossen ist. Zu diesem Zweck führt von der anhängererkennenden Anschlußklemme (18) eine Signalleitung zur einen Ansteuerungs- und Überwachungseinheit (7), welche über ihre Diagnoseleitung (17) das entsprechende Anhängeranschlußerkennungssignal an den Controler (8) weitermeldet. Der Controler (8) nutzt diese Information zur Stromersparnis. Während den Zeiten, in denen kein elektrischer Anschluß des Anhängerfahrzeuges vorliegt, hält er das Anhängeranschlußgerät (1), d.h. sich selbst sowie die beiden Ansteuerungs- und Überwachungseinheiten (6, 7) in einem Ruhezustand, in welchem diese stromverbrauchenden Einheiten (6, 7, 8) deaktiviert gehalten werden. Das Wecken aus diesem Ruhezustand erfolgt, sobald zum einen erkannt ist, daß ein elektrischer Anschluß eines Anhängerfahrzeugs an der Anschlußkontakteinheit (3) vorgenommen wurde und zum anderen eine Schaltanforderung über die Datenleitungen (11, 12) eingeht.

Es versteht sich, daß die Microcontrolereinheit (8) zur Erfüllung der oben beschriebenen Funktionen neben dem eigentlichen Controlerteil die nötigen Peripherieeinheiten umfaßt. Selbstverständlich kann anstelle des oben beschriebenen Steuergerätes (5) auch ein anders strukturiertes Steuergerät verwendet werden, das die sich aus der obigen Beschreibung ergebenden Funktionen erfüllt, beispielsweise ein einziger integrierter Baustein zur Bereitstellung der Controler- und der Schalteransteuerungsfunktionen.

## Patentansprüche

1. Elektrisches Anhängeranschlußgerät für ein Zugfahrzeug mit steuergeräteverbindendem Datennetz, mit
- einer Anschlußkontakteinheit (3) zum Anschließen elektrischer Komponenten (13) eines Anhängerfahrzeuges und
- einer der Anschlußkontakteinheit vorgeschalteten Leistungshalbleiterschaltergruppe (4), wobei jeweils ein Halbleiterschalter mit seiner Schaltstrecke zwischen einen Stromversorgungsanschluß (9) und einen zugeordneten Anschlußkontakt der Anschlußkontakteinheit eingeschleift ist,
**gekennzeichnet durch**
- einen oder zwei Datennetzanschlüsse (11, 12) zum Anschließen an das Datennetz des Zugfahrzeuges, über welche die Steuerungsinformationen für sämtliche Halbleiterschalter der Leistungshalbleiterschaltergruppe (4) empfangen werden, und
- ein gemeinsames Steuergerät (5) für sämtliche Halbleiterschalter der Leistungshalbleiterschaltgruppe (4), das die Halbleiterschalter in Abhängigkeit von über den oder die Datennetzanschlüsse eingehenden Steuerungsinformationen ansteuert.

2. Elektrisches Anhängeranschlußgerät nach Anspruch 1, weiter
**dadurch gekennzeichnet, daß**
jeweils eine Abtastleitung vom Leitungsabschnitt zwischen einem Leistungshalbleiterschalter und dem zugehörigen Anschlußkontakt zum Steuergerät (5) geführt ist, welches daraus eine Diagnoseinformation gewinnt, die es über den oder die Datennetzanschlüsse (11, 12) abgibt.

3. Elektrisches Anschlußgerät nach Anspruch 2, weiter
**dadurch gekennzeichnet, daß**
das Steuergerät (5) in Abhängigkeit von einem über eine zugehörige Anschlußklemme (18) der Anschlußkontakteinheit (3) erfaßte Anhängeranschlußinformation das Anhängeranschlußgerät in einem aktiven Betriebszustand oder einem Ruhezustand mit niedrigerem Stromverbrauch hält.

## Claims

1. An electrical trailer-connecting device for a towing vehicle with a data network linked to a control device, having
- a terminal block unit (3) for electrically connecting components (13) of a trailer vehicle and
- a semi-conductor power switch group (4) connected before the terminal block unit, in which the switching route of a semi-conductor switch provides a respective loop between a power supply terminal (9) and an associated terminal of the terminal block unit,
**characterised by**
- one or two data network terminals (11, 12) connected to the data network of the towing vehicle, through which the control data for various semi-conductor switches of the semi-conductor power switch group (4), are received and
- a common control device (5) for various semi-conductor switches of the semi-conductor power switch group (4), which controls the semi-conductor switches in conjunction with ingoing control data across the data network terminal or terminals.

2. An electrical trailer-connecting device as claimed in claim 1, further
**characterised in that**
a sensor line from the section of line between a semi-conductor power switch and the associated terminal is respectively run to the control device (5), which obtains diagnostics information therefrom, which it transmits across the data network terminal or terminals (11, 12).

3. An electrical trailer-connecting device as claimed in claim 2, further
**characterised in that**
the control device (5), in conjunction with trailer-connection information detected via a terminal (18) belonging to the terminal block unit (3), holds the trailer-connecting device in an active operating state or a stand-by state requiring low power consumption.

## Revendications

1. Appareil de raccordement électrique d'une remorque destiné à un véhicule tracteur équipé d'un réseau informatique reliant un appareil de commande, comprenant
- un module (3) de contacts de connexion destiné à connecter des composants électriques (13) d'une remorque et
- un groupe d'interrupteurs de puissance à semi-conducteurs (4) monté en amont du module de contacts de connexion, chaque interrupteur à semi-conducteurs formant une boucle par son trajet de commutation entre une connexion (9) d'une alimentation en courant et un contact correspondant de connexion du module de contacts de connexion,
caractérisé par
- une ou deux connexions (11, 12) au réseau informatique pour le raccordement au réseau informatique du véhicule tracteur, par lesquelles les informations de commande de tous les interrupteurs à semi-conducteurs du groupe (4) d'interrupteurs de puissance à semi-conducteurs sont reçues et
- un appareil de commande (5) qui est commun à tous les interrupteurs à semi-conducteurs du groupe (4) d'interrupteurs de puissance à semi-conducteurs et qui attaque les interrupteurs à semi-conducteurs en fonction d'informations de commande entrant par la ou les connexion(s) au réseau informatique.

2. Appareil de raccordement électrique d'une remorque selon la revendication 1, caractérisé par ailleurs en ce que
un conducteur d'exploration est monté sur la section de conducteur comprise entre chaque interrupteur de puissance à semi-conducteurs et le contact correspondant de connexion à l'appareil de commande (5) qui en obtient une information de diagnostique qu'il transmet par la ou les connexion(s) (11, 12) au réseau informatique.

3. Appareil électrique de raccordement selon la revendication 2, caractérisé par ailleurs en ce que
l'appareil de commande (5) maintient l'appareil de raccordement de la remorque à un état actif de service ou à un état de repos à faible consommation de courant en fonction d'une information de raccordement de la remorque détectée par une borne correspondante de connexion (18) faisant partie du module (3) de contacts de connexion.
